# FASCICULE DE BREVET EUROPEEN

(11) **EP 2 553 301 B1**
(45) Date de publication et mention de la délivrance du brevet: **20.04.2016**
(21) Numéro de dépôt: 11708512.6
(22) Date de dépôt: 27.01.2011
(51) Int. Cl.: F16K 21/10

(54) **ROBINET À FERMETURE TEMPORISÉE**
HAHN MIT VERZÖGERTEM SCHLIESSEN
TAP WITH DELAYED CLOSING

(30) Priorité: 26.03.2010 FR 1001205
(43) Date de publication de la demande: 06.02.2013
(73) Titulaire: Les Robinets Presto, 92120 Montrouge (FR)
(72) Inventeur: DUTHEIL, Daniel, F-17132 Meschers (FR)
(74) Mandataire: Eidelsberg, Olivier Nathan
(86) Numéro de dépôt international: PCT/FR2011/000037
(87) Numéro de publication internationale: WO 2011/117477

(56) Documents cités:
- EP-A1- 0 928 918
- EP-A2- 0 312 750
- FR-A- 475 960
- FR-A1- 2 406 145
- FR-A1- 2 492 942
- FR-A1- 2 509 007

## Description

La présente invention est relative à des perfectionnements aux robinets temporisés du genre de ceux dont l'enfoncement d'un bouton-poussoir détermine le soulèvement du clapet, l'écoulement de l'eau et simultanément la vidange d'une chambre de temporisation dans laquelle se déplace un piston comportant ledit clapet, le remplissage de ladite chambre s'effectuant par l'entremise d'un orifice calibré permettant de temporiser le déplacement dudit clapet repoussé vers son siège par l'entremise d'un ressort.

Si l'usager maintient le bouton-poussoir enfoncé, l'eau s'écoule et la temporisation de la fermeture est empêchée.

Cet inconvénient est très sensible dans une installation de douche où le robinet est commandé par un « robinet amorceur », d'une structure très simple, comportant un clapet et un bouton-poussoir faisant communiquer la chambre de temporisation du robinet principal avec l'air libre.

Dans le brevet français FR 2492942 il est décrit un robinet dans lequel le temps de maintien de l'enfoncement du bouton-poussoir est sans action sur la temporisation. Un tel robinet était particulièrement apte à être utilisé comme robinet amorceur dans une installation de douche.

L'expérience a montré que la réalisation d'un tel robinet était compliquée.

Dans le brevet européen EP 0928918 A1 il est décrit un robinet dont l'ouverture ne peut être obtenue qu'en relâchant le bouton-poussoir.

Ce robinet se caractérisait essentiellement par le fait que le clapet comportait une queue tubulaire par laquelle l'eau s'écoule lorsque le clapet est éloigné de son siège lors de l'action sur le bouton-poussoir usuel, ladite queue pouvant être obturée par une membrane élastiquement déformable interposée entre l'extrémité de ladite queue et ledit bouton-poussoir.

Ce dispositif s'est montré efficace toutefois, il est apparu que la réalisation de la membrane était délicate et que celle-ci était très sensible au vieillissement.

L'expérience a également montré que ce robinet présentait des problèmes en ce qui concerne son assemblage.

De la façon connue, le clapet comporte un corps présentant une entrée d'eau et une sortie disposées, chacune, de part et d'autre du siège et une queue tubulaire traversant le siège de façon étanche, caractérisé en ce que ladite queue peut être obturée par l'extrémité interne d'un bouton-poussoir lors de son enfoncement.

D'autres caractéristiques ressortiront mieux par la description qui va suivre faite en se référant aux dessins annexés à titre d'exemple indicatif seulement sur lesquels :

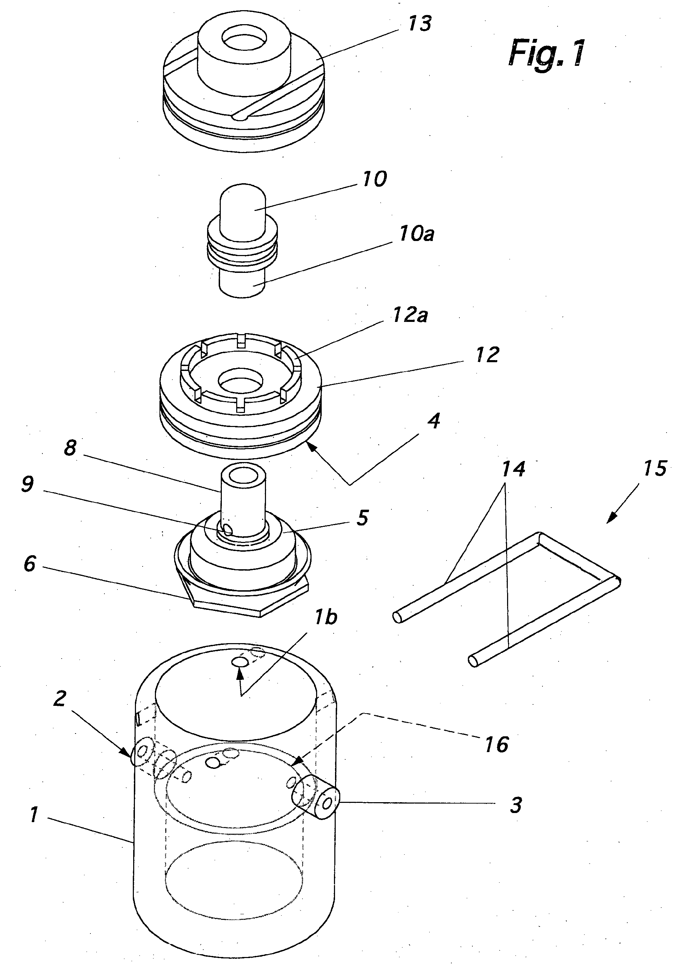

- la figure 1 est une vue en perspective éclatée montrant les pièces composant le robinet de l'invention ;
- la figure 2 est une vue en coupe longitudinale du robinet, les pièces mobiles étant représentées dans la position qu'elles occupent au repos (robinet fermé) ;

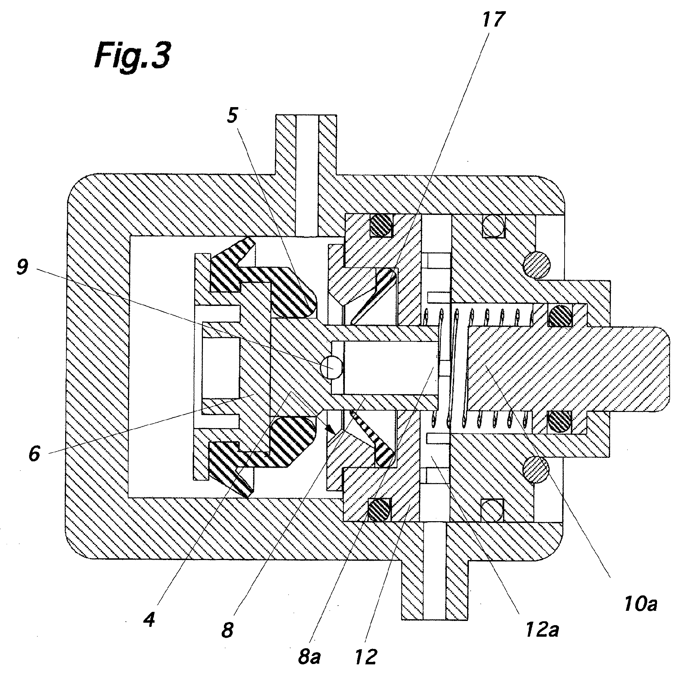

- la figure 3 est une vue analogue à celle 2, montrant la position des pièces mobiles lors de l'enfoncement du bouton-poussoir ;
- la figure 4 est une vue analogue à celle 2, les pièces mobiles étant représentées en position d'ouverture du robinet ;

Le robinet comporte un corps 1, une entrée d'eau 2 et une sortie d'eau 3 disposées, chacune, de part et d'autre d'un siège 4 normalement obturé par un clapet 5 porté par un piston 6 délimitant avec le corps une chambre de temporisation 7. Le piston 6 est soumis à l'action d'un ressort, non représenté car cette technique est bien connue, interposé entre son extrémité 6a et le fond 1 a du corps.

De la façon connue, le piston 6 comporte une queue tubulaire 8, présentant, au moins un orifice 9 permettant à l'eau de pénétrer dans ladite queue pour, ensuite, être évacuée par l'orifice de sortie 3.

Selon l'invention, l'ouverture du robinet, qui implique de déplacer le piston porte clapet selon la flèche F₁ et assuré par un bouton-poussoir 10 dont l'extrémité interne 10a est conformée pour obturer l'extrémité 8a de la queue 8.

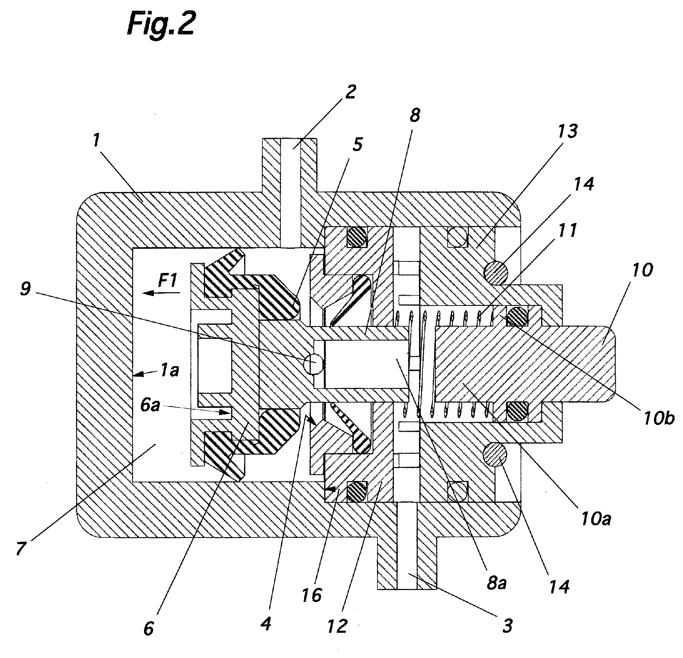

Comme cela ressort de la figure 2, en enfonçant le poussoir 10, on repousse par l'entremise de la queue 8 le piston 6 et, par suite, on écarte le clapet 5 de son siège 4.

L'eau provenant de l'entrée 2 peut pénétrer dans la queue mais ne peut pas atteindre la sortie 3 et s'écouler, puisque l'extrémité de ladite queue est totalement obturée par l'extrémité interne 10a du bouton-poussoir.

Cette situation va perdurer tant qu'une action sera maintenue sur le bouton-poussoir.

Comme cela ressort des dessins, l'enfoncement du bouton-poussoir est soumis à l'action d'un ressort antagoniste 11, guidé sur sa partie interne et interposé entre sa collerette 10b et l'organe fixe 12 portant le siège 4.

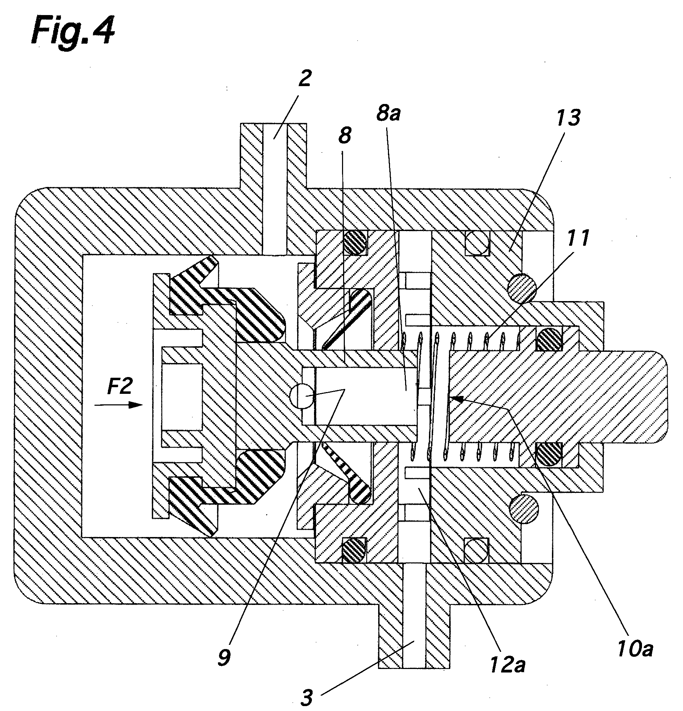

En relâchant le bouton-poussoir 10, celui-ci est repoussé par le ressort 11 en démasquant l'extrémité 8a de la queue 8, en mettant en communication les orifices 2 et 3 et en permettant, simultanément, au piston 6 de se déplacer, selon la flèche F₂ selon la technique habituelle (fig.4). L'eau pénètre dans la chambre 7 par l'entremise, par exemple, d'une petite encoche pratiquée à la périphérie de la jupe du clapet. Ce dispositif est décrit dans le brevet européen EP 0928918 A1

Il ressort des explications ci-dessus, qu'un tel robinet est particulièrement adapté pour constituer un dispositif d'amorçage d'une installation de douche.

Dans ce cas, l'orifice d'entrée 2 est relié à l'orifice de décharge du robinet principal et la durée de temporisation est déterminée pour permettre la vidange de la chambre de temporisation du robinet principal

D'une façon générale, les différentes pièces constituant le robinet ont été étudiées pour permettre un assemblage facile, sans l'aide d'outil.

Le piston, le siège et son organe de support 12 et le bouton-poussoir 10 sont maintenus dans le corps 1 par l'entremise d'un couvercle 13, engagé dans le corps 1, formant aussi l'organe de guidage du bouton-poussoir 10.

L'ensemble est maintenu par une broche traversant le corps 1, par des trous 1 b et contre laquelle prend appui le couvercle 13 sous l'action du ressort 11.

Comme montré sur les dessins, on utilise deux broches 14 formant, chacune, la branche d'un étrier 15.

La pénétration de l'organe 12, portant le clapet 4, dans le corps 1 est limitée par un épaulement 16. L'organe 12 et le couvercle 13 présentent le même diamètre, de ce fait, les mêmes joints peuvent être utilisés pour assurer l'étanchéité avec le corps 11.

L'organe 12 comporte un embout 12a, contre lequel prend appui le couvercle13, présentant des fentes diamétrales permettant à l'eau provenant de la queue 8 d'atteindre la sortie 3 lorsque les pièces mobiles sont dans la position montrée sur la figure 4.

Le clapet 4 et l'organe 12 forment un ensemble fonctionnel réalisé en deux pièces assemblées, par clipsage par exemple, pour permettre le montage du joint 17, permettant à la queue 8 de traverser cet ensemble de façon étanche.

## Revendications

1. Robinet temporisé du genre de ceux comportant une entrée d'eau (2), une sortie (3), un piston (6) portant un clapet (5) et comportant une queue tubulaire (8) traversant le siège (4) de façon étanche et comportant, au moins, un orifice (9) par lequel l'eau peut pénétrer lorsque le clapet est éloigné de son siège et un orifice de sortie (8a), **caractérisé en ce que** le soulèvement du clapet est commandé par l'enfoncement un bouton-poussoir (10) dont l'extrémité interne est conformée pour obturer l'orifice de sortie (8a) de la queue (8), ledit bouton-poussoir étant soumis à l'action d'un ressort antagoniste (11).

2. Robinet selon la revendication 1, **caractérisé en ce que** le piston et sa queue, le clapet et son organe de support et le bouton-poussoir sont maintenus dans un corps (1) par l'entremise d'un couvercle (13) engagé dans ce dernier.

3. Robinet selon la revendication 2, **caractérisé en ce que** le couvercle constitue l'organe de guidage du bouton-poussoir et est maintenu par, au moins, une broche (14) traversant le corps (1).

4. Robinet selon l'une des revendications 1 à 3, **caractérisé en ce que** le ressort de rappel (11) du bouton-poussoir est utilisé pour maintenir l'organe de support du siège contre un épaulement (16) du corps.

## Patentansprüche

1. Wasserhahn mit Selbstschlussventil, umfassend einen Wassereinlass (2), einen Auslass (3), einen Kolben (6), der einen Ventilkegel (5) trägt und einen rohrförmigen Stiel (8) umfasst, welcher den Ventilsitz (4) abgedichtet durchquert und mindestens eine Öffnung (9), durch die das Wasser dringen kann, wenn der Ventilkegel von seinem Ventilsitz entfernt ist, und eine Austrittsöffnung (8a) umfasst, **dadurch gekennzeichnet, dass** das Anheben des Ventilkegels durch das Drücken eines Druckknopfes (10) gesteuert wird, dessen inneres Ende ausgelegt ist, die Austrittsöffnung (8a) des Stiels (8) zu verschließen, wobei der Druckknopf der Wirkung einer Gegenfeder unterworfen ist.

2. Wasserhahn nach Anspruch 1, **dadurch gekennzeichnet, dass** der Kolben und sein Stiel, der Ventilkegel und sein Trägerelement und der Druckknopf in einem Gehäuse (1) vermittels eines in letzteres eingesetzten Deckels (13) gehalten sind.

3. Wasserhahn nach Anspruch 2, **dadurch gekennzeichnet, dass** der Deckel das Führungselement des Druckknopfes bildet und durch mindestens einen Stift (14) gehalten ist, der durch das Gehäuse (1) hindurchgeht.

4. Wasserhahn nach einem der Ansprüche 1 bis 3, **dadurch gekennzeichnet, dass** die Rückholfeder (11) des Druckknopfes verwendet ist, um das Trägerelement des Ventilsitzes gegen einen Vorsprung (16) des Gehäuses zu halten.

## Claims

1. Delayed valve of the type comprising a water entrance (2), a water exit (3), a plunger (6) supporting a shutter (5) and comprising a tubular tail (8) passing through the seat (4) in a sealed manner and comprising, at least, an opening (9) through which water can penetrate when the shutter is moved away from its seat and an exit opening (8a), **characterized in that** the raising of the shutter is controlled by the pressing down of a pushing button (10) the internal end of which is conformed to obturate the exit opening (8a) of the tail (8), said pushing button being submitted to the action of a counter spring (11).

2. The valve of claim 1, **characterized in that** said plunger and its tail, said shutter and its supporting organ and said pushing button are maintained in a body (1) by a cover (13) engaged into said body.

3. The valve of claim 2, **characterized in that** said cover constitutes the guiding organ of the pushing button and is maintained by at least one spindle (14) passing through said body (1).

4. The valve as defined in one of claims 1 to 3, **characterized in that** the return spring (11) of the pushing button is used to maintain the supporting organ of the seat against a shoulder (16) of the body.
